# EUROPÄISCHE PATENTSCHRIFT

(11) **EP 0 557 926 B1**
(45) Veröffentlichungstag und Bekanntmachung des Hinweises auf die Patenterteilung: **20.08.1997**
(21) Anmeldenummer: 93102749.4
(22) Anmeldetag: 22.02.1993
(51) Int. Cl.: B60R 9/06

(54) **Tragvorrichtung**
Carrying device
Porte-charge

(30) Priorität: 26.02.1992 DE 9202471 U
(43) Veröffentlichungstag der Anmeldung: 01.09.1993
(73) Patentinhaber: Negutz, Johann, D-40627 Düsseldorf (DE)
(72) Erfinder: Negutz, Johann, D-40627 Düsseldorf (DE)

(56) Entgegenhaltungen:
- EP-A- 0 041 889
- DE-U- 8 906 835
- FR-A- 2 593 128
- US-A- 4 989 765
- US-A- 5 033 662

## Beschreibung

Die Erfindung bezieht sich auf eine Tragvorrichtung zur lösbaren Befestigung einer Trageinheit an einem tragenden Teil eines Kraftfahrzeugs mit einem am Kraftfahrzeug heckseitig befestigten Aufnahmebock und einem daran lösbar befestigten, zur Aufnahme der Trageinheit dienenden Kupplungsteil.

Eine derartige Tragvorrichtung ist aus GB 2 108 450 A bekanntgeworden. Bei dieser Tragvorrichtung weist der Aufnahmebock eine an einer Zugstange befestigte Aufnahmeplatte auf, die zur Befestigung einer üblichen Anhänge- bzw. Zugkupplung dient. Derartige Kupplungen sind - wie allgemein bekannt - stets mittig angeordnet und weisen eine vergleichsweise schmale Breite auf, so daß demzufolge auch die in der Aufnahmeplatte befindlichen Aufnahmeöffnungen sich mehr oder weniger im mittleren Bereich des Fahrzeugs befindet. Entsprechend schmal ist auch eine Tragplatte eines Kupplungsteils ausgebildet, welche Bolzen aufweist, die mit den Aufnahmeöffnungen in der Aufnahmeplatte zusammenfallen. Auf der gegenüberliegenden Seite der Platte weist diese sich flügelartig verbreiternde Elemente auf, zwischen denen das Anschlußelement eines Anhängekastens mittels eines Bolzens angeschlossen werden kann. Bei der vorbekannten Tragvorrichtung handelt es sich mithin um eine typische Anhängekupplung, die nur zum Anschluß speziell ausgebildeter Geräte dient und nicht für einen vielfältigen Einsatz ausgebildet ist, um damit die unterschiedlichsten Lasten und Ladungen, wie Ersatzräder, Fahrräder, Motorräder oder dergleichen zu transportieren.

Der Erfindung liegt die Aufgabe zugrunde, eine Tragvorrichtung im Sinne eines individuell einsetzbaren und in vielfältiger Weise kombinierbaren Transportsystems zu schaffen, das sich auch bei unterschiedlichen Einsätzen stets durch eine stabile Verspannung auszeichnet.

Diese Aufgabe wird erfindungsgemäß dadurch gelöst, daß der Aufnahmebock einen sich quer erstreckenden Träger mit wenigstens zwei mit Abstand zueinander angeordneten Aufnahmebohrungen und jeweils darin fest eingesetzten Hülsen aufweist und daß der Kupplungsteil der Hülsen angepaßte Bolzen, eine damit fest verbundene Anschlußplatte und auf der den Bolzen gegenüberliegenden Seite befestigte Zapfen zum Aufstecken von rohrförmigen Tragelementen der Trageinheit aufweist.

Die Ausbildung des Aufnahmebocks als Träger mit wenigstens zwei, nahe deren Enden angeordneten Aufnahmebohrungen hat den Sinn, die Aufnahmebohrungen möglichst mit großem Abstand zueinander anzuordnen. Hierdurch ergeben sich besonders günstige Abstützkräfte, so daß auch vergleichsweise große Lasten, wie z. B. Motorräder aufgenommen werden können. Für eine gute Kraftaufnahme bzw. eine stabile Verspannung trägt auch das Kupplungsteil bei, das trotz wahlweise unterschiedlich ausgebildeter Trageinheiten durch vielfache Kombinationen eine flexible Nutzung des Systems, sei es zum Transport von Fahrrädern, Campingblöcken, Skiern usw., gewährleistet. Ein derart lösbar ausgebildetes Tragsystem ist leicht zugänglich und läßt sich bei Bedarf sehr einfach und in relativ kurzer Zeit mit üblichen Standardwerkzeugen montieren oder demontieren.

Zweckmäßigerweise sind zur axialen Verriegelung des Kupplungsteils mit dem Aufnahmebock Schrauben vorgesehen, die entweder quer zur Längserstreckung des Kupplungsteils seitlich durch den Träger und die Hülse hindurch in die Bolzen des Kupplungsteils oder in Längsrichtung des Kupplungsteils durch die Hülse und die mit einer Längsbohrung versehenen Bozen hindurch jeweils in einen sich in die Längsbohrung erstreckenden Ansatz der Zapfen eingeschraubt sind. Anstelle von zwei seitlichen Schrauben kann auch eine sich über die gesamte Breite des Trägers hindurch erstreckende Verriegelungsstange vorgesehen sein.

Wichtig für die Erfindung ist, daß der Aufnahmebock immer über gleiche Aufnahmebohrungen für den Einschub des Grundträgers aufweist. Ansonsten kann der Aufnahmebock von Fahrzeug zu Fahrzeug unterschiedlich gestaltet sein.

In alternativer Ausführung kann der Aufnahmebock auch zweiteilig ausgebildet sein und einen am Kraftfahrzeug unlösbar befestigten Tragteil (Einschraubteil) und ein damit lösbar verbundenes Aufnahmeteil in Form eines sich im wesentlichen quer erstreckenden Trägers mit wenigstens zwei mit Abstand zueinander angeordneten Aufnahmen und darin eingesetzten Hülsen aufweisen.

Bei dieser Ausführungsvariante weist der Tragteil im Bereich jedes Kupplungsteils eine Aufnahmehülse mit einem einseitig eingesetzten Gewindestück und einen mit der im Träger sitzenden Hülse verschweißten Führungsbolzen auf, der über eine Schraube mit der jeweils zugehörigen Aufnahmehülse verspannt ist.

Der Anschlußbock kann beispielsweise für Fahrräder, Ersatzräder, Skier usw. bis 150 kg belastbar sein. Bei Mofas, Motorrädern, Containern oder dergleichen bis zu 250 kg und für Campingblöcke, Werkzeugschränke oder dergleichen bis 450 kg. Bei den schwereren Ausführungen empfiehlt sich eine Stützeinrichtung für jeden Aufnahmebock. Sollte auch diese noch nicht ausreichen, so kann eine Zusatzstützeinrichtung vorgesehen sein, die die Trageinheit abstützt.

Je nach zu beförderndem Gegenstand kann die Trageinheit in ihrer einfachsten Form von einem Rahmengestell mit Profilleisten gebildet sein. Bei der Aufnahme von mehreren Elementen, wie z. B. mehreren Fahrrädern oder dergleichen, kann das Rahmengestell auch verstellbar, vorzugsweise ausziehbar ausgebildet sein und schließlich ist es denkbar, daß das Rahmengestell mit einem eigenen Fahrwerk ausgerüstet ist, so daß die Ladung bewegbar und abstellbar ist.

Bevorzugte Ausführungsbeispiele der Erfindung sind in der Zeichnung dargestellt und werden im folgenden näher erläutert. Es zeigen:
- Fig. 1: eine Tragvorrichtung mit einem einteilig ausgebildeten Aufnahmebock in teilweisem Querschnitt,
- Fig. 2: eine Vorderansicht auf einen Träger des Aufnahmebocks,
- Fig. 3: eine abgewandelte Ausführungsform der Tragvorrichtung mit einem zweiteilig ausgebildeten Aufnahmebock,
- Fig. 4: eine weiter abgewandelte Variante des Kupplungsteils in Etagenform,
- Fig. 5: ein erster Teil einer Stützeinrichtung in der Seitenansicht, für einen Aufnahmebock,
- Fig. 6: ein zweiter Teil der Stützeinrichtung für den Aufnahmebock,
- Fig. 7: die zugehörige Heckansicht des zweiten Teils der Stützeinrichtung,
- Fig. 8: eine Zusatzstützeinrichtung für die Trageinheit in der Seitenansicht und
- Fig. 9: in der zugehörigen Heckansicht.

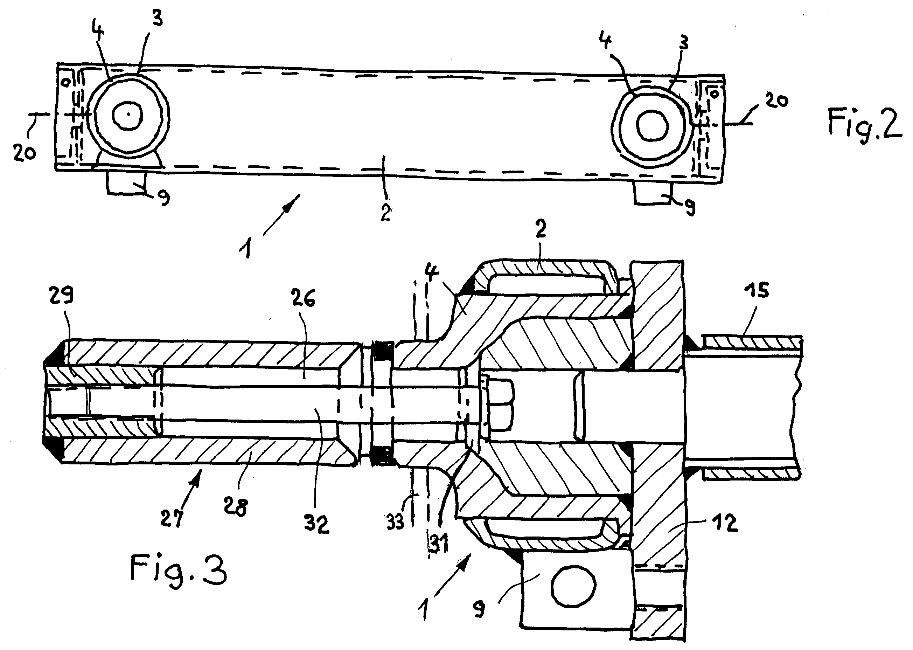

Die erfindungsgemäße Tragvorrichtung ist an der Heckseite eines nicht dargestellten Kraftfahrzeugs angeordnet. Sie weist einen Aufnahmebock 1 auf, der einen sich im wesentlichen quer zum Kraftfahrzeug erstreckenden Träger 2 mit wenigstens zwei mit Abstand zueinander angeordneten Aufnahmebohrungen 3 (Fig. 2) und darin eingesetzte Hülsen 4 aufweist. Die Hülsen 4 sind mit dem Träger 2 verschweißt. Jede Hülse weist auf ihrer nach hinten weisenden Seite eine größere Öffnung 5 auf, die zur Innenseite hin in eine Schräge 6 übergeht. Auf der zum Kraftfahrzeug weisenden Seite besitzt jede Hülse eine Längsbohrung 7. Der Träger 2 ist an einem mit 8 bezeichneten festen Teil des Kraftfahrzeugs befestigt. An der Unterseite des Trägers 2 ist jeweils im Bereich der Aufnahmebohrungen 3 ein als Anschlag ausgebildeter Abstützkörper 9 angeordnet, dessen Funktion weiter unten näher erläutert wird.

Ein mit dem Aufnahmebock 1 zusammenwirkender Kupplungsteil 11 besteht aus einer Anschlußplatte 12 auf deren einen, zum Anschlußbock 1 weisenden Seite im Bereich der Hülsen 4 Bolzen 13, und auf deren anderen Seite Zapfen 14 angeordnet sind, auf die rohrförmige Tragelemente 15 einer im einzelnen nicht dargestellten Trageinheit 16 aufgesteckt werden können. Die Zapfen 14 besitzen Ansätze 17, die in eine Längsbohrung 18 der Bolzen eingesetzt sind. Die der Schräge 6 der Hülse 7 zugewandte Stirnseite der Bolzen 13 ist gleichfalls abgeschrägt und mit 19 bezeichnet. Zur Befestigung des Grundkörpers (Trageinheit 16) an dem Zapfen dient eine Befestigungsschraube 21. Quer dazu können weitere Befestigungsschrauben angeordnet sein. Diese Befestigungsschraube sitzt in einem Lagerbock 22, in dem in etwa horizontaler Richtung eine Stellschraube 23 eingesetzt ist, die sich an dem oben erwähnten Abstützkörper 9 abstützt. Über diese Einrichtung kann das Transportsystem verspannt werden und dabei der Grundkörper leicht angehoben werden.

Zur axialen Sicherung des Kupplungsteils 11 im Anschlußbock 1 dienen Schrauben 20, die seitlich durch den Träger 2 und die Hülse 4 hindurch in den Bolzen 13 eingeschraubt werden können.

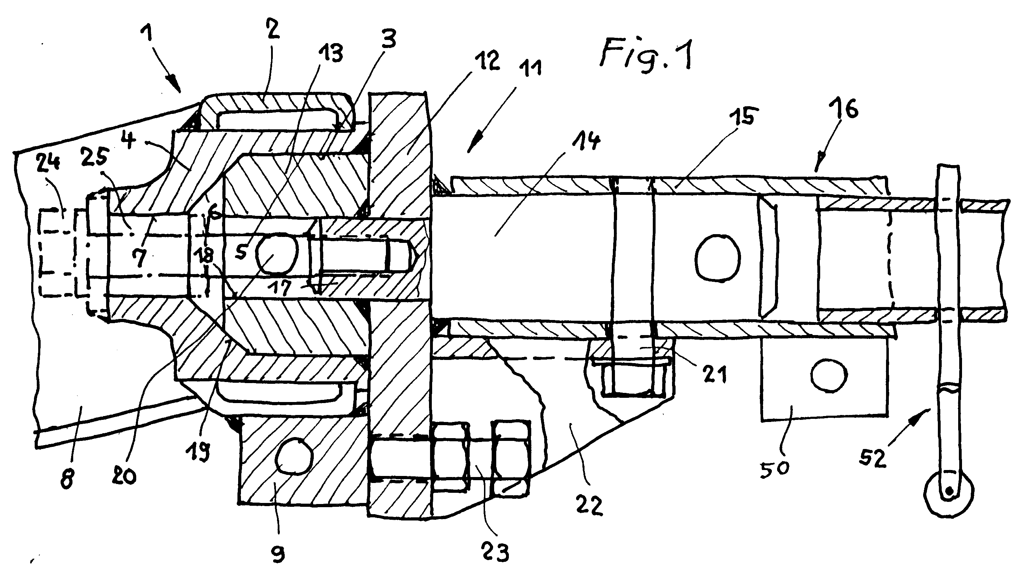

In Fig. 1 ist im Bereich des Anschlußbocks mit strichpunktierten Linien eine alternative Art der Axialbefestigung angezeigt. Anstatt einer Fixierung durch seitliche Schrauben ist eine Befestigung durch eine in Längsrichtung der Einrichtung einsetzbare Schraube 24 vorgesehen, die unter Zwischenschaltung einer Hülse 25 in den Ansatz 17 des Zapfens 14 einschraubbar ist.

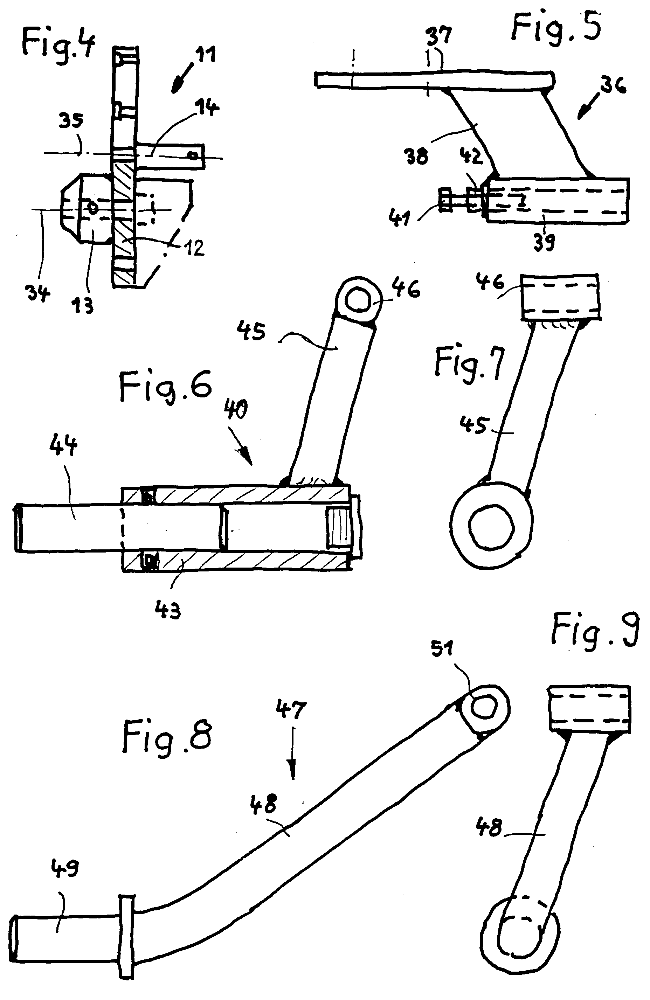

In Fig. 3 ist eine zweiteilige Ausführung des Aufnahmebocks dargestellt. Der Träger 2 und die Hülse 4 sind wiederum miteinander zu einer Einheit verschweißt. An der Innenseite jeder Hülse 4 ist ein hohler Führungsbolzen 26 angeschweißt, der in einem am Kraftfahrzeug unlösbar befestigten Tragteil 27 (Einschraubteil) sitzt. Der Tragteil 27 weist im Bereich jeden Kupplungsteils 11 eine Aufnahmehülse 28 mit einem einseitig eingesetzten Gewindestück 29 auf, in das eine sich über eine Unterlegscheibe 31 an der Innenseite der Hülse 4 abstützbare Schraube 32 einschraubbar ist. Bei dieser Ausführungsvariante ist somit der Aufnahmebock, d. h. der Träger mit den Hülsen abschraubbar. Das bietet sich immer dann an, wenn das Fahrzeug ohne den Aufnahmebock gefahren werden soll. In diesem Fall wird vor das Einschraubteil bzw. vor die Aufnahmehülse 28 ein Stopfen gesetzt, der in der Zeichnung nicht dargestellt ist. Da das Ende der Einschraubhülse 28 im Bereich beispielsweise einer Stoßstange 33 liegt, sind somit nur die Stopfen in der Stoßstange zu sehen.

In Fig. 4 ist eine abgewandelte Ausführung der Kupplungseinrichtung 11 gezeigt, und zwar dergestalt, daß die Achse 34 des Bolzens 13 zu der Achse 35 des Zapfens 14 in vertikaler Ebene versetzt angeordnet ist. Eine solche Einrichtung ergibt die Möglichkeit, die Trageinheit im Vergleich zum Anschluß der Kupplungseinrichtung am Fahrzeug höher anzuordnen. Durch Auswechseln der Kupplungsteile können unterschiedliche Höhen der Trageinheiten zum Träger erreicht werden.

Bei schweren Tragvorrichtungen mittels derer vergleichsweise große Lasten getragen werden sollen, ist eine Stützeinrichtung denkbar. Ein erster Teil dieser Stützeinrichtung 36 ist in Fig. 5 gezeigt. Diese besteht im wesentlichen aus einer am Kraftfahrzeug zu befestigenden Befestigungsplatte 37, einer im wesentlichen senkrecht dazu stehenden Stützplatte 38, an deren unteren Ende eine Aufnahmehülse 39 mit einer darin sitzenden Spannschraube 41 und Kontermutter 42 angeordnet ist.

Ein zweiter Teil 40 der Stützeinrichtung ist in den Fig. 6 und 7 gezeigt. Dort ist eine Aufnahmehülse 43 auf einem in Fahrzeuglängsrichtung angeordneten Bolzen 44 aufgeschoben und mit diesem über eine Schweißnaht, z. B. Rundumschweißnaht, verbunden. Am gegenüberliegenden Ende der Aufnahmehülse 43 ist ein schräg nach oben weisender Stützarm 45 vorgesehen, an dessen Ende ein Lagerauge 46 zum Anschluß am Abstützkörper 9 des Trägers 2 vorgesehen ist. Bei eingeschobenen Bolzen 44 in die Aufnahmehülse 39 kann die Spannschraube 41 der Träger 2 zusätzlich abgestützt werden, so daß entstehende Belastungskräfte sich zum Teil über die Stützeinrichtung umlenken lassen. Dadurch werden auftretende Spitzenkräfte auf mehrere Stellen des Fahrzeugs verteilt.

Sofern diese zweiteilige Stützeinrichtung noch nicht ausreicht, kann eine weitere Zusatzstützeinrichtung 47 vorgesehen sein, so wie sie in den Fig. 8 und 9 gezeigt ist. Diese Zusatzstützeinrichtung weist eine vorzugsweise schräg nach hinten oben verlaufende Stützstrebe 48 auf, die an ihrem einen Ende einen Aufnahmezapfen 49 zum Einstecken in die Aufnahmehülse 43 aufweist und an ihrem anderen Ende wiederum ein Lagerauge 51 zum Anschluß an einem Lagerbock 50 der Trageinheit 16 besitzt. Diese Trageinheit kann von einem Rahmengestell mit Profilleisten gebildet sein, wobei das Rahmengestell verstellbar, vorzugsweise ausziehbar ausgebildet ist. Unter Umständen kann die Trageinheit 16 auch mit einem eigenen Fahrwerk 52 (Fig. 1) ausgerüstet sein, so daß die Ladungen verfahrbar und abstellbar sind.

## Patentansprüche

1. Tragvorrichtung zur lösbaren Befestigung einer Trageinheit (16) an einem tragenden Teil (8) eines Kraftfahrzeugs mit einem am Kraftfahrzeug heckseitig befestigten Aufnahmebock (1) und einem darin lösbar befestigten, zur Aufnahme der Trageinheit (16) dienenden Kupplungsteil (11), **dadurch gekennzeichnet**, daß der Aufnahmebock (1) einen sich quer erstreckenden Träger (2) mit wenigstens zwei mit Abstand zueinander angeordneten Aufnahmebohrungen (3) und jeweils darin fest eingesetzten Hülsen (4) aufweist und daß der Kupplungsteil (11) den Hülsen (4) angepaßte Bolzen (13), eine damit fest verbundene Anschlußplatte (12) und auf der den Bolzen (13) gegenüberliegenden Seite befestigte Zapfen (14) zum Aufstecken von rohrförmigen Tragelementen (15) der Trageinheit (16) aufweist.

2. Tragvorrichtung nach Anspruch 1, **dadurch gekennzeichnet,** daß die einander zugewandten Innenseiten der Hülsen (4) und der Bolzen (13) jeweils eine aufeinander abgestimmte Abschrägung (6, 19) aufweisen.

3. Tragvorrichtung nach einem oder mehreren der Ansprüche 1 bis 2, **dadurch gekennzeichnet,** daß zur axialen Verriegelung des Kupplungsteils (11) mit dem Aufnahmebock (1) Schrauben (20, 24) vorgesehen sind, die entweder quer zur Längserstreckung des Kupplungsteils (11), seitlich durch den Träger (2) und die Hülse (4) hindurch in die Bolzen (13) des Kupplungsteils (11) oder in Längsrichtung des Kupplungsteils (11) durch die Hülse (4) und die mit einer Längsbohrung (18) versehenen Bolzen (13) hindurch jeweils in einen sich in die Längsbohrung (18) erstreckenden Ansatz (17) der Zapfen (14) eingeschraubt sind.

4. Tragvorrichtung nach einem oder mehreren der Ansprüche 1 bis 3, **dadurch gekennzeichnet,** daß im Bereich der einen Seite der Anschlußplatte (12) am Träger (2) des Aufnahmebocks (1) Abstützkörper (9) (Anschlag) und auf der gegenüberliegenden Seite der Anschlußplatte (12) Lagerböcke (22) befestigt sind, in denen mit den Abstützkörpern (9) zusammenwirkende Stellschrauben (23) und mit dem rohrförmigen Tragelementen (15) der Trageinheit (16) verspannbare Befestigungsschrauben (21) angeordnet sind.

5. Tragvorrichtung nach Anspruch 1, **dadurch gekennzeichnet,** daß der Aufnahmebock (1) zweiteilig ausgebildet ist und einen am Kraftfahrzeug unlösbar befestigten Tragteil (27) (Einschraubteil) und ein damit lösbar verbundenes Aufnahmeteil in Form eines sich im wesentlichen quer erstreckenden Trägers (2) mit wenigstens zwei mit Abstand zueinander angeordneten Aufnahmebohrungen (3) und darin eingesetzten Hülsen (4) aufweist.

6. Tragvorrichtung nach Anspruch 5, **dadurch gekennzeichnet,** daß der Tragteil (27) im Bereich jedes Kupplungsteils (11) eine Aufnahmehülse (28) mit einem einseitig eingesetzten Gewindestück (29) und einen mit der im Träger (2) sitzenden Hülse (4) verschweißten Führungsbolzen (26) aufweist, der über eine Schraube (32) mit der jeweils zugehörigen Aufnahmehülse (28) verspannt ist.

7. Tragvorrichtung nach Anspruch 5 oder 6**, dadurch gekennzeichnet,** daß die Aufnahmehülse (28) auf der einen Seite und der Träger (2) mit den Hülsen (4) auf der anderen Seite einer heckseitigen Stoßstange (33) des Kraftfahrzeugs angeordnet ist.

8. Tragvorrichtung nach einem oder mehreren der Ansprüche 5 bis 7, **dadurch gekennzeichnet,** daß die Achse (34) des Bolzens (13) und die Achse (35) des Zapfens (14) in vertikaler Ebene versetzt zueinander angeordnet sind.

9. Tragvorrichtung nach einem oder mehreren der Ansprüche 1 bis 8, **gekennzeichnet durch** eine zusätzliche Stützeinrichtung (36) für jeweils ein Kupplungsteil, die einen ersten Teil mit einer am Fahrzeug anschraubbaren Befestigungsplatte (37), einer darauf im wesentlichen senkrecht stehenden Stützplatte (38) und einer daran befestigten Aufnahmehülse (39) mit einer Spannschraube (41) aufweist.

10. Tragvorrichtung nach Anspruch 9, **dadurch gekennzeichnet,** daß die Stützeinrichtung einen zweiten Teil (40) mit einem Tragbolzen (44), einer damit verschweißten in die Aufnahmehülse (39) einschiebbaren Aufnahmehülse (43) mit einem Stützträger (45) aufweist, der an seinem der Aufnahmehülse abgewandten Ende über ein Lagerauge (46) am Abstützkörper (9) angelenkt ist.

11. Tragvorrichtung nach einem oder mehreren der Ansprüche 1 bis 10, **gekennzeichnet durch** eine Zusatzstützeinrichtung (47), die eine vorzugsweise schräg nach hinten oben verlaufende Stützstrebe (48) mit einem an ihrem einen Ende angeordneten Aufnahmezapfen (49) für die Aufnahmehülse und mit einem an ihrem anderen Ende angeordneten Lagerauge (51) zum Anschluß an einem Lagerbock (50) der Trageinheit (16) aufweist.

## Claims

1. Carrying device for a carrier assembly (16) removably secured to a supporting part (8) of a vehicle, the carrying device comprising a pick up frame (1) connected at the rear side of the vehicle and a coupling member (11) removably connected within the pick up frame (1) and adapted to take up the supporting carrier assembly (16) characterized in that the pick up frame (1) is provided with a transverse bracket (2) having at least two mounting apertures (3) arranged with a distance to each other and each provided with fixed secured sleeves (4) therein, the coupling member (11) comprises bolts (13) adapted with regard to the sleeves (4) and having a connecting plate (12) securely fixed thereto on one side and having on the opposite side of the bolts (13) fixed pins (14) for the attachment of tubular carrier elements (15) of the carrier assembly (16).

2. Carrying device according to claim 1, characterized in that the inner surfaces faced each other of the sleeves (4) and the bolts (13) are provided with slants (6,19) which are adapted to each other.

3. Carrying device according to one or more of the claims 1 to 2, characterized in that for to axial interlocking of the coupling member (11) with the pick up frame (1), screws (20,24) are provided, which are screwed either transverse to the longitudinal extention of the coupling member (11) at one side through the bracket (2) and the sleeve (4) into the bolts (13) of the coupling member (11) or in the longitudinal direction of the coupling member (11) through the sleeve (4) and a longitudinal bore (18) of the bolts (13) into each a lug (17) provided at the pins (14) and extending into the longitudinal bore (18).

4. Carrying device according to one or more of the claims 1 to 3, characterized in that in the area of one side of the connecting plate (12) of the pick up member (1) supporting members (9) (stop member) are connected and that at the other side of the connecting plate (12) bearing brackets (22) are connected in which adjusting screws (23) and fastening screws (21) are located, said adjusting screws (23) are adapted to cooperate with the supporting members (9) and said fastening screws (21) bolted with the tubular carrier elements (15) of the carrier assembly (16).

5. Carrying device according to claim 1, characterized in that the pick up member (1) is made of two parts and having a carrying member (27) (screwing part) undetachable secured to the vehicle and a pick up part in form of a bracket (2) extending mainly in a transverse direction and detachable secured to the carrying member (27) and having at least two mounting apertures (3) arranged with a distance to each other and provided with sleeves (4) inserted in the mounting apertures (3).

6. Carrying device according to claim 5, characterized in that the carrying member (27) in the area of each coupling member (11) is provided with a receiving sleeve (28), a threaded coupling (29) and a guide bolt (26); said threaded coupling (29) is inserted in the receiving sleeve (28) from one side and said guide bolt (26) is welded together with the sleeve (4) inserted in the bracket (2).

7. Carrying device according to claims 5 or 6, characterized in that the receiving sleeve (28) is positioned at a first side of a rearward located bumper (33) of the vehicle and that the bracket (2) with the sleeves (4) are positioned at the other side of the bumper (33).

8. Carrying device according to one or more of the claims 5 to 7, characterized in that the axis (34) of the bolt (13) and the axis of the pin (14) are located offset to each other with regard to a vertical plane.

9. Carrying device according to one or more claims 1 to 8, characterized in that an additional supporting device (36) is provided for each of the coupling members said additional supporting device (36) having a first part comprising at fastening plate (37) screwable to the vehicle, further a supporting plate (38) in the main vertically positioned to the fastening plate (37) and further a receiving sleeve (39) with a tightening screw (41).

10. Carrying device according to claim 9, characterized in that the supporting device (36) comprises a second part (40) having a carrying bolt (44), a receiving sleeve (43) welded together with the carrying bolt (44) and insertable into the receiving sleeve and connected to a support bracket (45), which with it one end averted from the receiving sleeve (39) is articulated via a bearing lug (46) at the supporting member (9).

11. Carrying device according to one or more of the claims 1 to 10, characterized in that there is provided a supplementary supporting device (47) comprising a support leg (48) extending preferably backwards top corner and having located at the one end a receiving pin (49) and at the other end a bearing lug (51); said receiving pin (49) is adapted to receive the receiving sleeve (43) and said bearing lug (51) is adapted for a connection to a bearing block (50) of the supporting assembly (16).

## Revendications

1. Porte-charge pour la fixation détachable d'un dispositif porteur (16) sur une partie portante d'un véhicule avec un support (1) fixé sur le côté arrière et de manière détachable pour reçevoir l'élément d'accouplement (11) servant à dispositif porteur (16), caractérisé en ce que le support (1), qui indique l'emplacement transversale du porteur (2) au moyen de deux trous (3) au minimum espacés l'un de l'autre et dans lesquels viennent se fixer des douilles (4), ainsi que par l'élément d'accouplement (11), qui montre les boulons (13) adaptés aux douilles (4), une plaque de raccordement (12) qui doit leur être reliée et sur le côté qui fait face aux boulons (13), les tenons (14) qui sont à fixer pour relever les éléments porteurs (15) cylindriques du dispositif porteur (16).

2. Selon la revendication 1, le porte- charge est ainsi caractérisé par l'ajustement des parties intérieures des douilles (4) et des boulons (13) les unes dans les autres selon un biseautage (6,19) respectif défini.

3. Selon l'une ou les deux revendications de 1 à 2, le porte-charge est caractérisé par le fait que des vis (20,24) sont prévues pour le verrouillage axial de l'élément d'accouplement (11) avec le support (1), lesquelles sont vissées soit transversalement, sur la longueur de l'élément d'accouplement (11) et de part en part sur le côté du porteur (2) et des douilles (4) dans les boulons (13) d'élément d'accouplement (11), soit de manière longitudinale dans l'élément d'accouplement (11), au travers des douilles (4) et des boulons (13) qui sont revêtus d'un alésage longitudinal (18) dans l'embout (17) des tenons (14), qui eux-mêmes s'étendent dans l'alésage (18).

4. Selon l'une ou plusieurs des revandications de 1 à 3, le porte-charge est caractérisé sur l'espace de l'un côté de la plaque de raccordement (12) par la fixation sur le porteur (2) du support (1) de support d'entretoise (9) et sur le côté opposé par la fixation des paliers (22), dans lesquels sont disposés des vis d'ajustage (23) qui agissent grâce à des supports d'entretoise (9) ainsi que des vis de fixations (21) qui relient le dispositif porteur (16) avec des éléments porteurs (15) cylindriques.

5. Selon la revendication 1, le porte- charge est ainsi caractérisé par la composition en deux parties d'un support (1). Il indique la présence d'une partie du support (27) indémontable fixée sur le véhicule avec lequel est relié une partie de réception détachable sous la forme d'un porteur (2) qui s'étend généralement en travers avec au moins deux trous (3) distants l'un de l'autre et dans lesquels se trouvent les douilles (4).

6. Selon la revendication 5, le porte- charge est ainsi caractérisé par une partie portante (27) qui indique en ce qui concerne l'élément d'accouplement (11), qu'une douille de réception (28) est raccordée avec un tampon de vissage (29) disposé de manière unilatérale de même qu'un boulon de guidage (26), soudé dans le porteur (2) contenant une douille (4), est raccordé au-delà d'une vis (32) avec chaque douille de réception (28) correspondante.

7. Selon la revendication 5 ou 6, le porte-charge est caractérisé par le fait que les douilles de réception (28) sont placées sur un des côtés de la partie arrière du pare-choc (33) du véhicule et que de l'autre côté se trouve le porteur (2) avec les douilles(4).

8. Selon une ou plusieurs revendications de 5 à 7, le porte-charge est caractérisé par l'ajustement décalé parallèlement l'assemblage de l'axe du boulon (13) et de l'axe (35) du tenon (14) sur un plan vertical.

9. Selon une ou plusieurs revendications de 1 à 8, le porte-charge est caractérisé par l'ajout d'un dispositif-support (36) pour chaque élément d'accouplement (11), composé d'une première partie qui comprend un élément de fixage (37) vissable au véhicule, sur laquelle est disposée le bras-support (38) généralement de manière perpendiculaire et où vient se fixer une douille de réception (39) avec une vis de fixation (41).

10. Selon la revendication 9, le porte-charge est caractérisé par l'ajout d'un dispositif-support (36) pour chaque élément d'accouplement (11), composé d'une deuxième partie (40), comprenant un boulon portant (44) soudé avec la douille de réception (43) accompagnée d'une poutre (45), que l'on peut intercaler dans la douille de réception (39). La poutre (45) est reliée par une articulation à son extrémité appliquée à cette douille de réception par-dessus un oeuil (46) situé sur le support d'entretoise (9).

11. Selon une ou plusieurs revendications de 1 à 10, le porte-charge est caractérisé par un équipement accessoire qui indique une jambe de force de préférence inclinée vers l'arrière avec un tenon de réception (49) placé à l'une de ses extrémités pour la douille de récéption et avec un oeuil (51) placé à son autre extrémité pour raccorder le palier (50) du dispositif porteur (16).
